# EUROPEAN PATENT APPLICATION

(11) **EP 0 833 186 A1**
(43) Date of publication of application: **01.04.1998**
(21) Application number: 96307127.9
(22) Date of filing: 27.09.1996
(51) Int. Cl.: G02F 1/1337, H04N 5/74

(54) **Projection-type liquid crystal display system**

(71) Applicant: VICTOR COMPANY OF JAPAN, LIMITED, Kanagawa-ku Yokohama (JP)
(72) Inventor: Furuya, Masato, Yokosuka-shi, Kanagawa-ken (JP); Takanashi, Itsuo, Kamakura-shi, Kanagawa-ken (JP); Nakagaki, Shintaro, Miura-shi, Kanagawa-ken (JP)
(74) Representative: Senior, Alan Murray

(57) **Abstract**

A projection-type liquid crystal display system comprises a display element (4) for modulating a linearly polarized component of reading light based on a display signal, a polarized beamsplitter (2) for entering the linearly polarized component of the reading light emitted from a light source (1) into the display element (4), and a projection lens (5) for projecting the reading light reflected from the display element on a screen (6). The display element (4) comprises a pixel electrode substrate (8) on which a plurality of rectangular pixel electrodes (7) are arrayed in a matrix pattern, a transparent substrate (10) disposed in a confronting relationship with pixel electrode substrate (8) and having a transparent electrode (9) thereon, liquid crystal (12) filled in a closed space between the pixel electrode substrate (8) and the transparent substrate (10), and alignment films (13, 14) aligning or orientating the liquid crystal (12) to a predetermined alignment direction. The alignment direction of the liquid crystal (12) is substantially parallel or normal to the direction of a side of each rectangular pixel electrode (7).

## Description

### BACKGROUND OF THE INVENTION

### 1. Field of the Invention:

This invention relates to a projection-type liquid crystal display system using a liquid crystal reflection-type display element.

### 2. Related Art:

The projection-type display system generally known in a display system using a liquid crystal reflection-type element. According to this display system, the polarized light is projected on a liquid crystal reflection-type element so that information light is reflected from this element as a result of modulation in accordance with a display image. Then, the specific polarized component is taken out from this information light by a polarized beamsplitter and projected on a screen, thereby displaying a projection image.

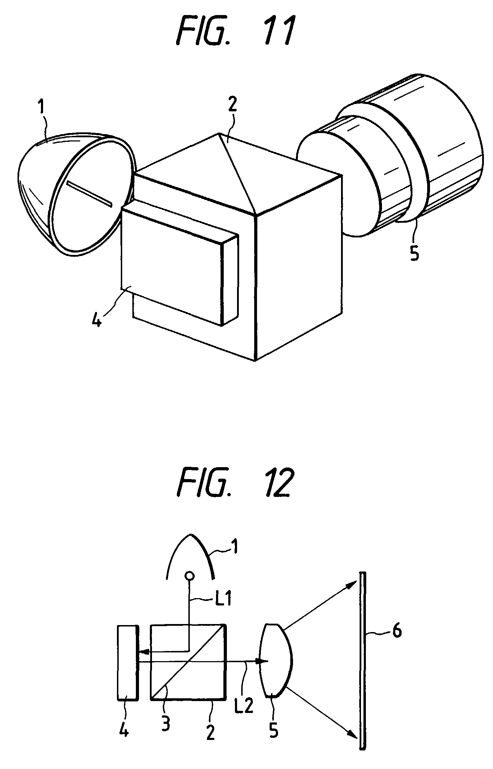

More specifically, as shown in Figs. 11 and 12, reading light L1 emitted from a light source 1 is entered into polarized beamsplitter 2 to separate reading light L1 through a polarization plate 3 of polarized beamsplitter 2 into two linearly polarized components (S wave and P wave) normal each other. Thus, a display element 4 receives the reading light having a predetermined polarization direction, such as P wave. Then, the reading light is modulated in a liquid crystal layer of display element 4 and reflected from information light, A projection lens 5 receives thus reflected information light and projects it on a screen 6.

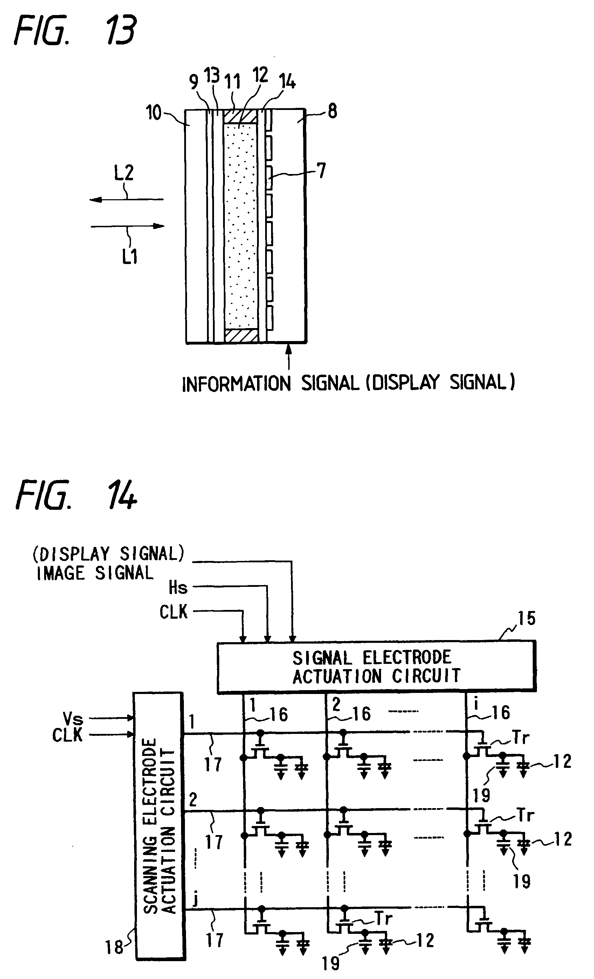

As shown in Fig. 13, display element 4 comprises a pixel electrode substrate 8 on the surface of which a plurality of pixel electrodes 7 are arranged in a matrix pattern, and a transparent substrate 10 on the surface of which a transparent electrode 9 is formed. More specifically, pixel electrode substrate 8 and transparent substrate 10 are spaced from each other by sealing 11 interposed therebetween at both ends thereof so as to define a closed space between these two confronting substrates 8 and 10. Liquid crystal 12 is filled or confined in this closed space. Furthermore, an alignment film 13 is interposed between transparent electrode 9 and liquid crystal 12, while another alignment film 14 is interposed between pixel electrode substrate 8 and liquid crystal 12. These alignment films (or layers) 13 and 14 have a function of directing liquid crystal 12 to a predetermined direction.

Fig. 14 shows an equivalent circuit of an active matrix-type substrate arrangement applicable to pixel electrode substrate 8. A signal electrode actuation circuit 15 samples an image signal (display signal) along the horizontal direction of the matrix-like pixel arrangement, and supplies the sampled image signal to a corresponding signal electrode 16. A scanning electrode 17 receives scanning pulses successively supplied at predetermined scanning intervals from a scanning electrode actuation circuit 18. In response to this scanning pulse, each pixel switching transistor Tr is turned on to write the sampled image signal to each pixel electrode 7. Associated with each pixel switching transistor Tr is auxiliary capacitor 19 for storing or maintaining the charge applied to liquid crystal 12. Signal electrode actuation circuit 15 receives a horizontal sync signal Hs and a reference clock CLK together with the image signal. Scanning electrode actuation circuit 18 receives a vertical sync signal Vs and reference clock CLK.

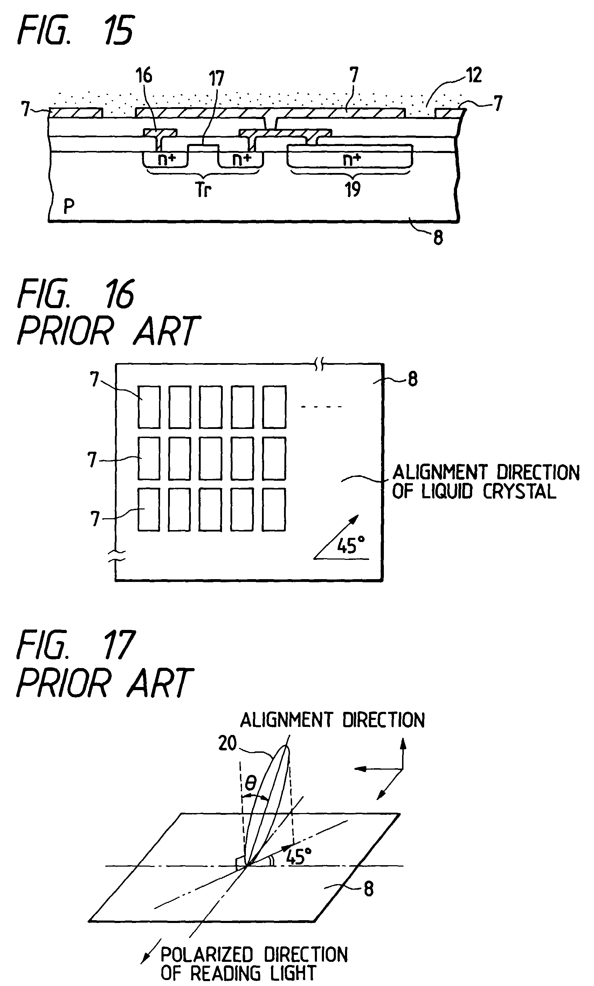

Fig. 15 shows a partial arrangement of the pixel electrode substrate which corresponds to one pixel. Pixel electrode 7 is formed to cover each pixel switching transistor Tr so as to shield the transistor Tr and realize a high aperture ratio. Furthermore, if necessary, it will be possible to form a light reflection layer of a dielectric multilayer film on the pixel electrode. The switching transistor Tr shown in the drawing is a MOS transistor arranged on a semiconductor substrate, although it is replaceable by a thin film transistor formed on a semiconductor or an insulating substrate. In the drawing, "n" and "p" respectively show the type of each semiconductor.

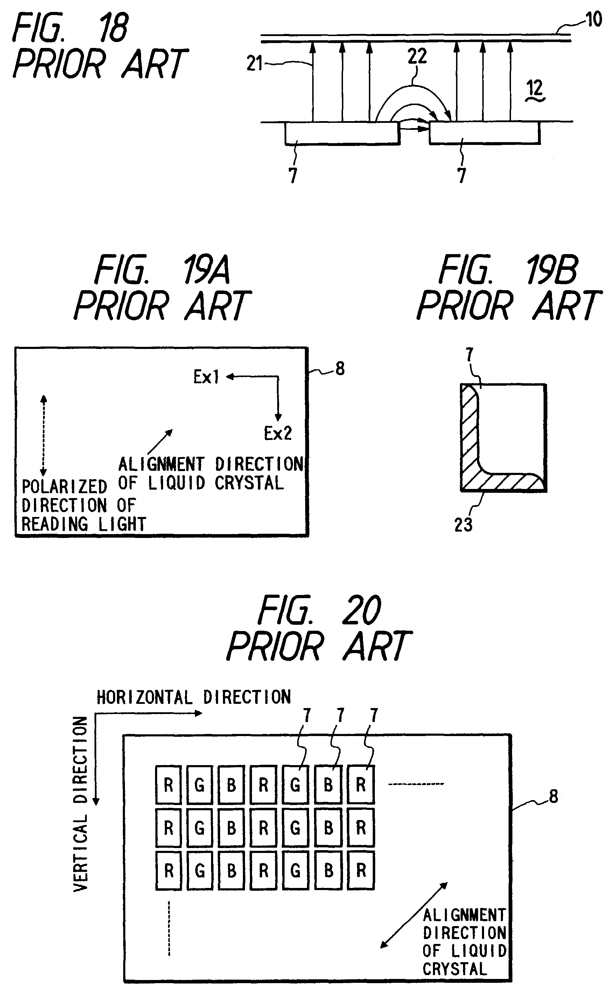

Fig. 16 is a view showing a relationship between the pixel arrangement and the liquid crystal alignment (orientation) in a conventional liquid crystal display element.

In this case, it is assumed that the alignment (orientation) of liquid crystal is a vertical alignment. In the vertical alignment, each crystal molecule is aligned along the directed slightly tilted (at a pretilt angle θ) from the vertical direction of pixel electrode substrate 8 as shown in Fig. 17, so that the movement of each liquid crystal molecule is directed in a predetermined direction when a voltage is applied.

In Fig. 16, an arrow shows the alignment direction of each liquid crystal molecule 20 given the above-described pretilt angle θ. According to the conventional technology, this alignment direction is generally set to approximately 45 ° with respect to each of the horizontal and vertical lines of the matrix-like pixel electrode arrangement.

However, according to the above-described conventional arrangement in which the alignment direction of liquid crystal is differentiated from the array direction of pixel electrodes, there is a problem that the image quality is deteriorated due to the influence of the lateral field as explained hereinafter.

Fig. 18 shows the electric field distribution or formation generated in liquid crystal layer 12 in accordance with a signal voltage maintained in pixel electrode 7. Liquid crystal 12 is actuated by a vertical field (i.e. electric field component perpendicular to the pixel electrode surface) between transparent electrode 10 and each pixel electrode 7 confronting each other. However, in the boundary region between adjacent two pixel electrodes 7 and 7, there will be caused lateral field 22 based on the electric potential difference.

Fig. 19A shows the relationship between the direction of lateral field 22 and the alignment direction of liquid crystal in the boundary region between adjacent two pixel electrodes 7 and 7. Liquid crystal is subjected to two lateral field components Eₓ₁ and Eₓ₂ corresponding to the horizontal and vertical directions of the matrix-like pixel electrode arrangements. The direction of each of two lateral field components Eₓ₁ and Eₓ₂ is different from the alignment (pretilt) direction of liquid crystal. Accordingly, as shown in Fig. 19B, a so-called disclination 23 which is a display defect is caused along two peripheral edges of square pixel electrode 7. In general, disclination 23 appears when the liquid crystal molecule is influenced by the lateral field so as to move in the direction different from the pretilt direction. Such a disclination 23 will result in deterioration of the display contrast due to contrast degradation or substantial deterioration of the aperture ratio, thus greatly worsening the displayed image quality.

Especially, according to the conventional liquid crystal display element, this kind of disclination appears along both of the short side and long side of a square pixel electrode. Hence, the influence of disclination is fairly large in the direction along which pixels are arranged at small pitches.

Furthermore, as shown in Fig. 20, there is the possibility that pixel electrodes are arranged in a stripe pattern corresponding to three primary colors RGB of light so as to realize a color display by monoplate (single plate) elements. In such a case, adjacent two pixels neighboring in the horizontal direction are different colors. As a result, if the screen is entirely displayed by red, there will be a significant amount of electric potential difference between the pixel electrode of R (turned on) and other pixel electrodes of G and B (turned off). Hence, nevertheless uniform display image, there is the problem that the displayed image quality is undesirably deteriorated by the influence of disclination. Regarding the array pitch of pixels, the horizontal direction along which pixels of RGB are arrayed repetitively has a small pitch compared with the vertical direction along which the same color pixels are arrayed continuously. In other words, the horizontal direction of the display screen is sensitive against the disclination in the horizontal direction and therefore the displayed image quality will be greatly deteriorated in the horizontal direction.

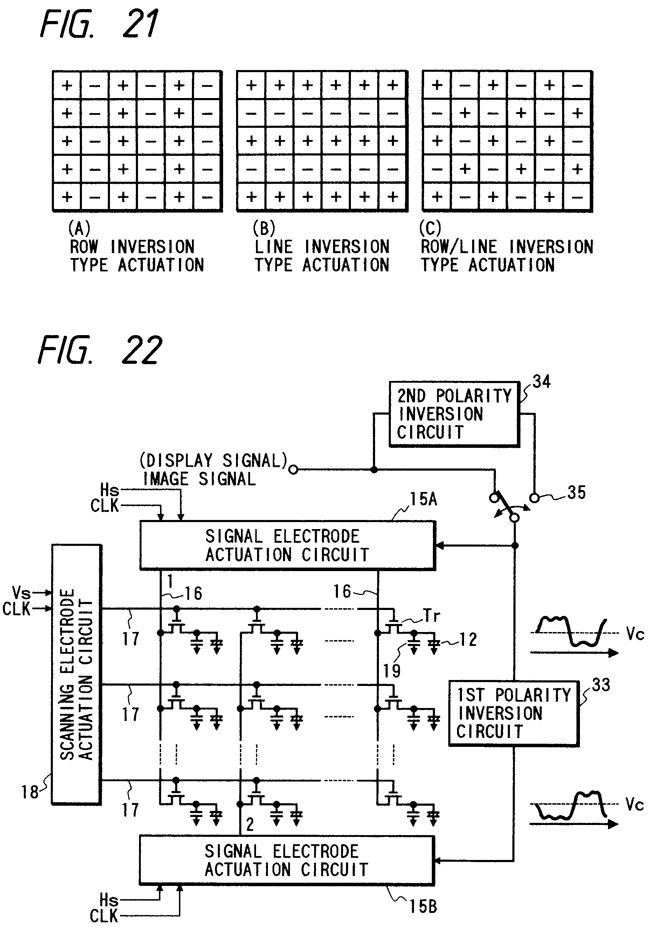

Furthermore, according to the active matrix type circuit arrangement of liquid crystal display elements shown in Fig. 14, writing of the image signal to each pixel is performed in synchronism with a field or frame period of the image signal. The polarity of the signal is inverted in this case to actuate the liquid crystal by alternate current. Accordingly, individual pixels are actuated by alternate voltage of a low frequency equivalent to 1/2 (30Hz/15Hz) of the field or frame frequency. There is a problem that the asymmetry, if it is caused due to polarities, will induce the flicker (i.e. flickering of image). To solve this problem, examples (A) through (C) of Fig. 21 show actuation methods for differentiating the polarities + and - of the voltage of the image signal between neighboring pixels. In Fig. 21, each square subsection represents a pixel or a pixel electrode. Example (A) is a row inversion-type actuation where the polarity of the image signal is inverted between adjacent two rows of pixels. Example (B) is a line inversion-type actuation where the polarity of the image signal is inverted between adjacent two lines of pixels. Example (C) is a row/line inversion-type actuation where the polarity of the image signal is inverted between adjacent two pixels in both row and line directions.

Fig. 22 shows a circuit arrangement for realizing the above-described inversion-type actuation of display elements. This arrangement is different from the arrangement of Fig. 14 in that two signal electrode actuation circuits 15A and 15B are provided. For example, odd numbers (1,3,5,---) of signal electrodes 16 are connected to one signal electrode actuation circuit 15A while even numbers (2,4,6,---) of signal electrodes 16 are connected to the other signal electrode actuation circuit 15B.

A first polarity inversion circuit 33, acting as a inversion signal supply means, is interposed between these signal electrode actuation circuits 15A and 15B. First polarity inversion circuit 33 alternately supplies these actuation circuits 15A and 15B image signals having opposite polarities.

According to this circuit arrangement, the polarity of image signal is inverted between neighboring two rows of pixels as shown in the example (A) of Fig. 21.

The image signal passing through a second polarity inversion circuit 34 can be inverted by a switching section 35 at appropriate intervals equivalent to the field and frame. For example, when the image signal is inverted by the interval of a line period, the row/line inversion-type actuation shown in the example (C) of Fig. 21 can be realized.

In this manner, by inverting the polarity of each pixel in accordance with the above-described inversion actuation, it becomes possible to average the flicker and reduce the visual influence of the same.

However, even if the above-described actuating method is adopted, an electric potential between neighboring pixels is increased because of opposite polarities of the signals supplied to these neighboring pixels. Accordingly, the lateral field between neighboring pixels is so enlarged that the displayed image quality is easily deteriorated due to the above-described disclination.

### SUMMARY OF THE INVENTION

Accordingly, in view of above-described problems encountered in the related art, a principal object of the present invention is to provide a projection-type liquid crystal display system which is capable of effectively suppressing the disclination and preventing the displayed image quality from being deteriorated.

In order to accomplish this and other related objects, the present invention provides a projection-type liquid crystal display system comprises a display element for modulating a linearly polarized component of reading light based on a display signal, an incidence means for entering the linearly polarized component of the reading light emitted from a light source into the display element, and a projection means for projecting the reading light reflected from the display element on a screen. The display element of the present invention comprises a pixel electrode substrate on which a plurality of rectangular pixel electrodes are arranged in a matrix pattern, a transparent substrate disposed in a confronting relationship with the pixel electrode substrate and having a transparent electrode thereon, liquid crystal filled in a closed space between the pixel electrode substrate and the transparent substrate, and an alignment means for aligning or orientating the liquid crystal to a predetermined alignment direction in such a manner that the alignment direction of the liquid crystal is substantially parallel or normal to the direction of a side of the rectangular pixel electrode.

According to features of preferred embodiments of the present invention, each of the plurality of pixel electrodes is allocated to one of three primary colors of light, so that pixel electrodes corresponding to the same color are arrayed along the same line with respect to a first direction, meanwhile pixel electrodes corresponding to three primary colors are arrayed in a predetermined repetitive sequence with respect to a second direction different from the first direction, furthermore the alignment direction of the liquid crystal is substantially parallel or normal to the first direction along which the same color pixel electrodes are arrayed.

Furthermore, the projection-type liquid crystal display system of the present invention may comprise a holographic color filter (holographic lens layer) or a microlens array corresponding to the arrangement of pixels for entering reading light corresponding to each of the three primary colors to a corresponding pixel electrode arranged on the pixel electrode substrate.

Still further, the projection-type liquid crystal display system of the present invention may comprise an inverse signal supply means for supplying display signals having inverse polarities from each other to neighboring pixel electrodes.

### BRIEF DESCRIPTION OF THE DRAWINGS

The above and other objects, features and advantages of the present invention will become more apparent from the following detailed description which is to be read in conjunction with the accompanying drawings, in which:
Fig. 1 is a view showing the arrangement of pixel electrodes disposed on a pixel electrode substrate of a display element of a projection-type liquid crystal display system in accordance with a first embodiment of the present invention;
Figs. 2A and 2B are views illustrating the relationship between the lateral field of the display element of Fig. 1 and the alignment direction of the liquid crystal;
Fig. 3 is a view showing the arrangement of pixel electrodes disposed on a pixel electrode substrate of a display element in accordance with a second embodiment of the present invention;
Fig. 4 is a view showing the arrangement of pixel electrodes disposed on a pixel electrode substrate of a display element in accordance with a third embodiment of the present invention;
Figs. 5A and 5B are views illustrating the relationship between the lateral field of the display element of Fig. 4 and the alignment direction of the liquid crystal;
Fig. 6 is a view showing the arrangement of pixel electrodes disposed on a pixel electrode substrate of a display element in accordance with a fourth embodiment of the present invention;
Fig. 7 is a perspective view showing the spatial arrangement of a liquid crystal element wherein a display element is inclined with respect to a polarized beamsplitter;
Fig. 8 is a side view showing the condition where the unnecessary portion is removed from the polarized beamsplitter shown in Fig. 7;
Fig. 9 is an enlarged cross-sectional view showing a modified arrangement of the display element;
Fig. 10 is a view showing a schematic arrangement of a liquid crystal display system incorporating the display element of Fig. 9;
Fig. 11 is a perspective view showing a general arrangement of a projection-type liquid crystal display system;
Fig. 12 is a schematic block diagram showing the display system shown in Fig. 11;
Fig. 13 is a cross-sectional view showing a general arrangement of a display element used for the display system of Fig. 11;
Fig. 14 is an equivalent circuit of the display element shown in Fig. 13;
Fig. 15 is a cross-sectional view showing the partial arrangement of the pixel electrode substrate which corresponds to one pixel shown in Fig. 14;
Fig. 16 is a plan view showing a conventional arrangement of pixels on a pixel electrode substrate;
Fig. 17 is a three-dimensional view showing a tilted condition of a liquid crystal molecule;
Fig. 18 is a view showing the formation of the lateral field caused between two neighboring pixel electrodes;
Figs. 19A and 19B are views illustrating the mechanism of generating disclination in each pixel electrode;
Fig. 20 is a plan view showing a conventional arrangement of color pixel electrodes;
Fig. 21 is a view showing three examples of pixel polarities for realizing the polarity inversion-type actuation of the image signal; and
Fig. 22 is a circuit diagram showing the arrangement used for realizing the polarity inversion-type actuation of the image signal.

### DETAILED DESCRIPTION OF THE PREFERRED EMBODIMENTS

Preferred embodiments of the present invention will be explained in greater detail hereinafter with reference to the accompanying drawings. Identical parts are denoted by the same reference numerals throughout the views.

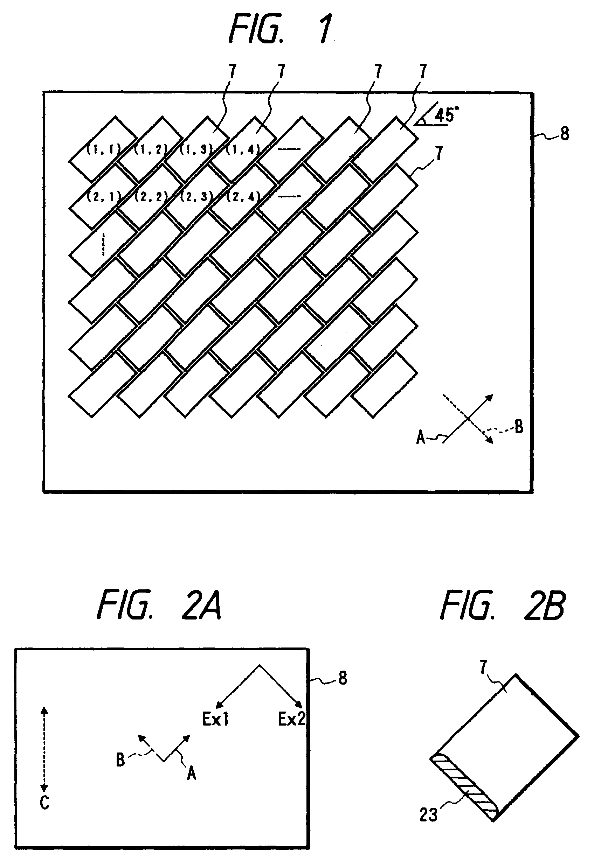

Fig. 1 is a view showing the relationship between a pixel electrode substrate of a display element and pixel electrodes provided on the surface thereof in a projection-type liquid crystal display system in accordance with a first embodiment of the present invention. Figs. 2A and 2B are views illustrating the relationship between the lateral field of the display element of Fig. 1 and the alignment direction of the liquid crystal. Identical parts are denoted by the same reference numerals throughout the views.

The arrangement of the projection-type liquid crystal display system of the present invention is fundamentally the same as the arrangement shown in Figs. 11 through 15.

As shown in Figs. 11 and 12, the projection-type liquid crystal display system of the present invention comprises, as essential components, display element 4 which modulates a linearly polarized component based on a display signal, polarized beamsplitter 2 which acts as an incidence means for receiving reading light L1 emitted from light source 1 and separating this reading light L1 into two linearly polarized components entered into display element 4, and projection lens 5 which acts as a projection means for projecting the reading light (information light) reflected from display element 4 on screen 6.

More specifically, reading light L1 emitted from light source 1 is entered into polarized beamsplitter 2 and separated into two linearly polarized components (S wave and P wave) normal each other through polarization plate 3 of polarized beamsplitter 2. Thus, display element 4 receives the reading light having a predetermined polarization direction, such as P wave. The reading light is modulated in the liquid crystal layer of display element 4 and is reflected from the display element 4 as information light. Thus reflected information light, after passing through projection lens 5, is projected on screen 6.

The display element 4, whose arrangement is shown in detail in Fig. 13, comprises pixel electrode substrate 8 on the surface of which a plurality of pixel electrodes 7 are arranged in a matrix pattern, and transparent substrate 10 on the surface of which a transparent electrode 9 is formed. More specifically, pixel electrode substrate 8 and transparent substrate 10 are spaced from each other by sealing 11 interposed therebetween at both ends thereof so as to define a closed space between these two confronting substrates 8 and 10. Liquid crystal 12 is filled or confined in this closed space. Furthermore, alignment film 13 is interposed between transparent electrode 9 and liquid crystal 12, while another alignment film 14 is interposed between pixel electrode substrate 8 and liquid crystal 12. These alignment films 13 and 14 have a function of directing liquid crystal 12 to a predetermined direction.

The above-described pixel electrode substrate 8 can be constructed by using the active matrix-type substrate arrangement shown in Fig. 14. Signal electrode actuation circuit 15 samples an image signal (display signal) along the horizontal direction of the matrix-like pixel arrangement, and supplies the sampled image signal to the corresponding signal electrode 16. Scanning electrode 17 receives scanning pulses successively supplied at predetermined scanning intervals from scanning electrode actuation circuit 18. In response to this scanning pulse, each pixel switching transistor Tr is turned on to write the sampled image signal to each pixel electrode 7. Associated with each pixel switching transistor Tr is an auxiliary capacitor 19 for storing the charge applied to liquid crystal 12. Signal electrode actuation circuit 15 receives horizontal sync signal Hs and reference clock CLK together with the image signal. Scanning electrode actuation circuit 18 receives vertical sync signal Vs and reference clock CLK.

Fig. 15 shows a partial arrangement of pixel electrode substrate 8 in the area corresponding to one pixel. Pixel electrode 7 is formed to cover each pixel switching transistor Tr so as to shield the transistor Tr and realize a high aperture ratio. Furthermore, if necessary, it will be possible to form a light reflection layer of a dielectric multilayer film on the pixel electrode. The switching transistor Tr shown in the drawing is a MOS transistor arranged on a semiconductor substrate, although it is replaceable by a thin film transistor formed on a semiconductor or an insulating substrate. In the drawing, "n" and "p" respectively show the type of each semiconductor.

Next, the characteristic portion of the first embodiment of the present invention will be explained.

As shown in Fig. 1, a plurality of rectangular pixel electrodes 7 are obliquely arranged on the rectangular surface of pixel electrode substrate 8. According to the present invention, either the long side or the short side of each pixel electrode 7 is disposed in parallel, i.e. at an angle 0° or 180°, to the alignment direction of liquid crystal 12. In this first embodiment of the present invention, both of the long side and the short side of each rectangular pixel electrode 7 is inclined at 45° with respect to the vertical and horizontal direction of pixel electrode substrate 8.

In this case, confronting sides or edges of neighboring pixel electrodes are substantially parallel or perpendicular to the alignment direction of the liquid crystal. More specifically, in the example shown in Fig. 1, the long side of each pixel electrode 7 is disposed in parallel to the alignment direction A of the liquid crystal. The short side of each pixel electrode 7 is disposed perpendicularly to the alignment direction A of the liquid crystal.

The information signal (image signal) is written into pixel electrodes 7 allocated to the positions (1,1), (1,2),---- (1,i) in response to the signal of the first scanning electrode, and is then written into pixel electrodes 7 allocated to the positions (2,1), (2,2),---- (2,i) in response to the signal of the second scanning electrode. In this manner, the writing operation is successively repeated from the 1st to the j scanning electrode.

An operation of the above-described first embodiment will be explained hereinafter.

As shown in Figs. 11 and 12, reading light L1 emitted from light source 1 is entered into polarized beamsplitter 2 and separated into S wave and P wave through polarization plate 3. Either one of these two linearly polarized waves, e.g. S wave, penetrates this polarization plate 3, while the other wave reflects at polarization plate 3 toward the direction of display element 4.

In display element 4, the reading light of P wave is modulated into information light L2 based on the information signal by the function of liquid crystal 12. The information light L2, reflected from display element 4, involves both of P-wave and S-wave components as a result of the modulation. Of these two waves, the P-wave component of information light L2 is reflected by polarization plate 3 of polarized beamsplitter 2 while the S-wave component of information light L2 penetrates the polarization plate 3. Then, the S-wave component of information light L2 is projected through projection lens 5 on the screen 6 so as to display the image.

According to the arrangement of the first embodiment of the present invention, the long side of each rectangular pixel electrode 7 is substantially parallel to the alignment direction A of liquid crystal 12 as shown in Fig. 1. Hence, the influence of disclination in the display image can be greatly reduced.

Fig. 2A shows the lateral field components Eₓ₁ and Eₓ₂ caused between neighboring two pixel electrodes 7 and 7 in relation to the alignment direction A of liquid crystal 12. Fig. 2B shows the disclination caused under the condition of Fig. 2A. The polarized direction C of the reading light is equal to the up-and-down direction of the drawing.

In Fig. 2A, lateral field components Eₓ₁ and Eₓ₂ are respectively generated along the long side and short side of each pixel electrode. In this case, lateral field component Eₓ₁ in the direction of the long side is substantially parallel, i.e. approximately 180°, to the alignment direction A of liquid crystal 12. Accordingly, no disclination is caused along the long side of pixel electrode 7. On the other hand, lateral field component Eₓ₂ in the direction of the short side is substantially perpendicular, i.e. approximately 90°, to the alignment direction A of liquid crystal 12. Accordingly, a significant amount of disclination is caused along the short side of pixel electrode 7.

As apparent from the comparison between Fig. 2B and Fig. 19B, the first embodiment of the present invention makes it possible to reduce the substantial area of the disclination on each pixel electrode 7 because such disclination appears on only one side of pixel electrode 7. Thus, the influence of the disclination can be effectively suppressed and the image quality can be greatly improved.

The first embodiment of the present invention disposes the long side of each pixel electrode in substantially parallel to the alignment direction of liquid crystal 12, However, it is needless to say that the present invention allows the short side of each pixel electrode to be disposed in substantially parallel to the alignment direction of liquid crystal 12. In this case, in Figs. 1 and 2, it will be preferable that liquid crystal 12 is aligned or orientated in the direction of an arrow B when the arrangement of pixel electrodes 7 remains unchanged.
Furthermore, it is of course possible to set the alignment direction of the liquid crystal in the direction opposed to the arrow A or B.

Next, a display element in accordance with the second embodiment of the present invention will be explained.

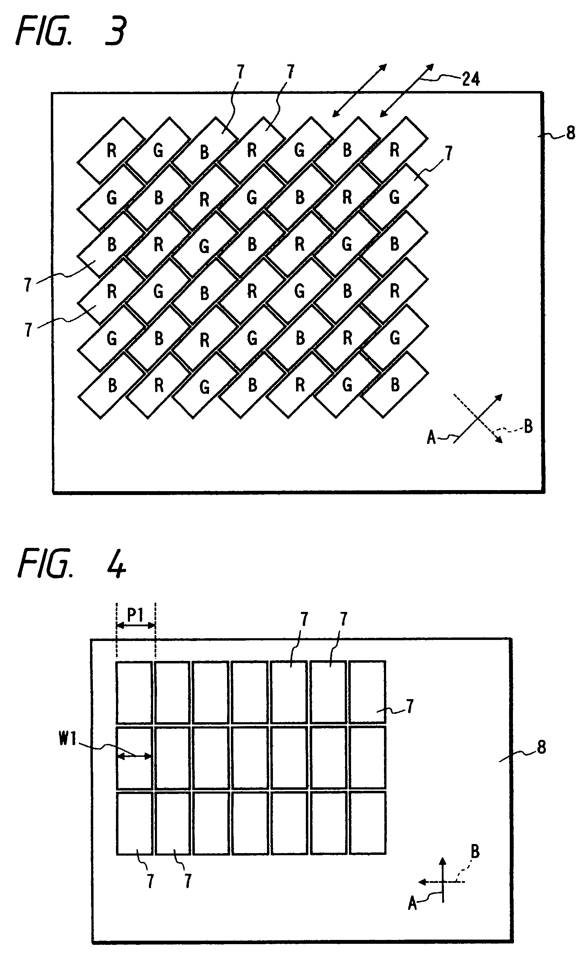

Fig. 3 is a view showing the relationship between a pixel electrode substrate of the display element of the second embodiment and pixel elements disposed on the surface of this pixel electrode substrate.

The display element of the second embodiment relates to the color display. A plurality of pixel elements 7 are arranged obliquely in the same manner as the first embodiment shown in Fig. 1. To realize the color display each pixel electrode represents one of three primary colors RGB of light. More specifically, pixel electrodes respectively allocated to three primary colors R,G and B are arrayed in this order in the direction normal to the alignment direction of liquid crystal 12, which is referred to as a second direction. Accordingly, the array direction (stripe direction) 24 of the same-color pixel electrodes, i.e. a first direction, is set to be substantially parallel to the alignment direction A of liquid crystal 12. Hence, the disclination is generated along only one side of each pixel electrode corresponding to the array direction of the same color pixels (See Fig. 2B). Accordingly, it becomes possible to effectively suppress the disclination from generating between neighboring pixel electrodes which tend to cause an electric potential difference therebetween due to the allocated different colors. Thus, it becomes possible to obtain a color display image having excellent quality.

Next, a display element in accordance with a third embodiment of the present invention will be explained.

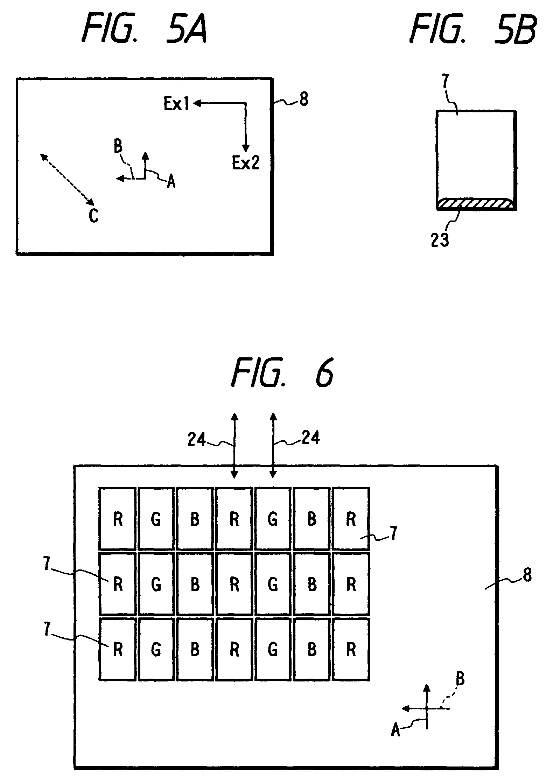

Fig. 4 is a view showing the relationship between a pixel electrode substrate of the display element of the third embodiment and pixel elements disposed on the surface of this pixel electrode substrate. Figs 5A and 5B are views illustrating the relationship between the lateral field of the display element of Fig. 4 and the alignment direction of the liquid crystal.

The third embodiment is different from the first and second embodiments in that each rectangular pixel electrode 7 is arrayed in a matrix pattern so that its long and short sides are substantially parallel to the vertical (longitudinal) and horizontal (lateral) directions of the rectangular surface of pixel electrode substrate 8. Meanwhile, the alignment direction A of the liquid crystal is set to be substantially parallel to the long side of each rectangular pixel electrode 7. Needless to say, the short side of each rectangular pixel electrode 7 is normal to the alignment direction of the liquid crystal.

According to this third embodiment, the arrangement of pixel electrodes 7 is not inclined with respect to the pixel electrode substrate 8. Hence, the third embodiment is advantageous in that the width W1 of each pixel electrode 7 can be enlarged compared with that of the above-described first and second embodiments when the array pitch P1 of pixel electrodes in the horizontal direction of the substrate 8 is the same in each of the first to third embodiments.

Fig. 5A shows lateral fields Eₓ₁ and Eₓ₂ caused between neighboring pixel electrodes 7 and 7 in relation to the alignment direction A of the liquid crystal display in accordance with the third embodiment. Of two lateral fields Eₓ₁ and Eₓ₂ derived from the potential difference between two neighboring electrodes, either one, e.g. Eₓ₂, is substantially parallel to the alignment direction A of the liquid crystal while the other is normal to the alignment direction A.

Accordingly, as shown in Fig. 5B, disclination 23 is generated along only one side of each pixel electrode 7. Thus, it becomes possible to reduce the deterioration of image quality derived from the disclination. Fig. 5B shows a condition where disclination 23 appears along only one short side of pixel electrode 7.

It is possible to set the alignment direction A of the liquid crystal in the direction of arrow B which is normal to the direction A. In such a case, disclination 23 will appear along only one long side of pixel electrode 7.

Furthermore, according to the pixel electrodes arrangement of this third embodiment, the polarized direction C of the reading light is set to be inclined at approximately 45° with respect to the array direction (longitudinal or lateral direction) of pixel electrode substrate 8 or each pixel electrode 7.

Next, a display element in accordance with a fourth embodiment of the present invention will be explained.

Fig. 6 is a view showing the relationship between a pixel electrode substrate of the display element of the fourth embodiment and pixel elements disposed on the surface of this pixel electrode substrate.

The fourth embodiment relates to a color display element. Pixel electrodes 7 are arrayed in the same manner as in the third embodiment shown in Fig. 4. Each pixel electrode is allocated to one of three primary colors R, G and B of light so that three primary colors R, G and B are repetitively disposed to form a stripe pattern to realize the color display.

Accordingly, the array direction (i.e. stripe direction) of the same-color pixel electrode becomes substantially parallel to the alignment direction A of the liquid crystal. In the same manner as the second embodiment, the disclination is generated along only one side of each pixel electrode corresponding to the array direction of the same color pixels (See Fig. 5B). Therefore, it becomes possible to effectively suppress the disclination from generating between neighboring pixel electrodes which tend to cause an electric potential difference therebetween due to the allocated different colors. Thus, it becomes possible to obtain a color display image having excellent quality.

In both of the above-described third embodiment (Fig. 4) and fourth embodiment (Fig. 6), the polarized direction C of the incident reading light L1 is set to be inclined at approximately 45° with respect to the alignment direction of the liquid crystal as previously described and illustrated by a dotted line in Fig. 5A.

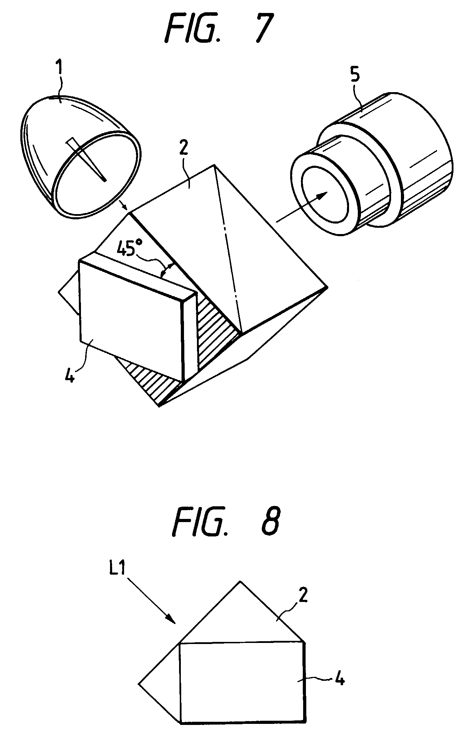

Fig. 7 shows the spatial arrangement of an optical system realizing the above-described relationship. The arrangement shown in Fig. 7 is different from the arrangement of the optical system shown in Fig. 11 in that display element 4 is angularly dislocated by an amount of approximately 45° with respect to the polarized beamsplitter 2. With this arrangement, the reading light (information light) having a desirable polarization direction can be obtained in accordance with the third and fourth embodiments.

The mutual positional relationship among light source 1, polarized beamsplitter 2 and projection lens 5 remains unchanged. Furthermore, the hatching region of Fig. 7 represents an unnecessary portion existing out of the display element area. Hence, it will be possible to remove the part of polarized beamsplitter 2 corresponding to this hatching region, as shown in Fig. 8.

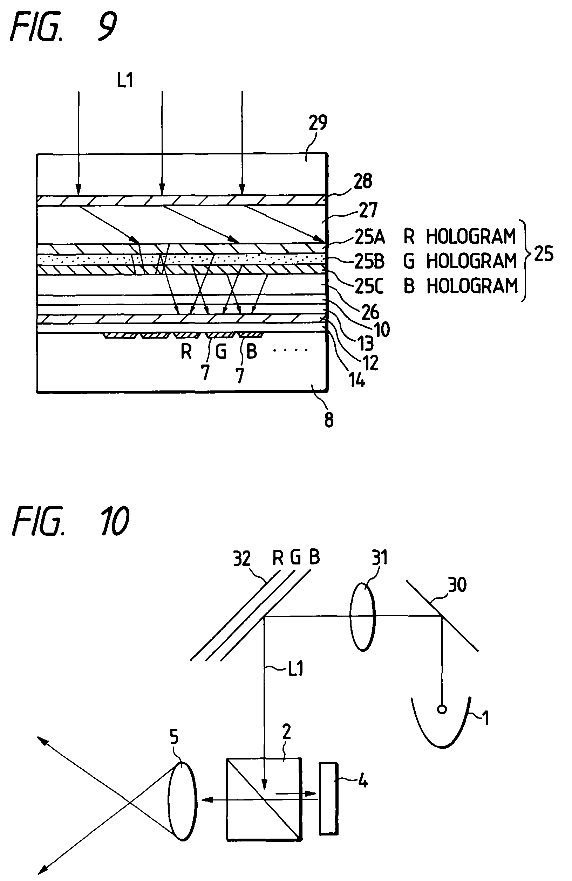

Figs. 9 and 10 cooperatively show the arrangement of a monoplate color liquid crystal display element having the RGB pixel arrangement for color display explained in the above-described second and fourth embodiments (Figs. 3 and 6). In this arrangement, a holographic color filter (holographic lens layer) 25 is provided as a means for entering or introducing a color light to a corresponding one of RGB pixels arranged in the stripe pattern. More specifically, holographic color filter 25 comprises R hologram 25A, G hologram 25B and B hologram 25C which respectively correspond to the primary three colors R, G and B of light and form a laminated three-layer construction. This holographic color filter 25 is provided through first glass substrate 26 on transparent substrate 10. The transparent electrode formed on transparent substrate 10 is made of ITO (Indium Tin Oxide). A second glass substrate 27, a polarized holographic layer 28 and a third glass substrate 29 are successively laminated on the holographic color filter 25.

A cold mirror 30, a lens 31, and a dichroic mirror 32 are sequentially disposed along the optical path extending from light source 1 and polarized beamsplitter 2.

Dichroic mirror 32 exclusively reflects only the particular waves corresponding to the three primary colors R, G and B of light while allowing others to pass through by utilizing the interference of light by means of thin films. Accordingly, RGB color lights are selectively reflected by dichroic mirror 32 and are then sent to polarized beamsplitter 2. According to this arrangement, each of three primary colors R, G and B is effectively converged and supplied to a corresponding pixel, realizing high efficiency in the utilization of light.

Holographic color filter 25, acting as a means for giving the color reading light corresponding to each pixel, can be replaced by a method of using the microlens array corresponding to the pixel arrangement or by an arrangement of providing color separation filters corresponding to respective pixels.

The present invention can be applicable to the liquid crystal element of Fig. 22 which inverts the polarity of the given image signal voltage, as well as the active matrix-type liquid crystal display element shown in Fig. 14.

In the case of the polarity inversion type liquid crystal element, it becomes possible to reduce the influence of disclination at the peripheral region of each pixel electrode by setting the alignment direction of the liquid crystal to be substantially parallel or normal to the side of each rectangular pixel electrode.

As apparent from the foregoing description, the present invention is characterized in the relationship between the alignment direction of the liquid crystal and the arrangement of pixels. The alignment of the liquid crystal is not limited to the electric controlled birefringence (ECB) mode of vertical alignment explained by the above-described embodiments. For example, the present invention can be applicable to the HFE mode or the like which is preferable for the reflection-type display element.

In short, the following functions and effects are brought by the projection-type liquid crystal display system of the present invention.

The arrangement of pixel electrodes is substantially parallel or normal to the alignment direction of the liquid crystal. With this relationship, it becomes possible to reduce the disclination appearing along the peripheral region of each pixel due to the lateral field derived from the potential difference between neighboring two pixel electrodes.

Moreover, in the monoplate color display system, it becomes possible to reduce the disclination derived from the potential difference between neighboring two electrodes of different colors. In this manner, the present invention greatly improve the quality of the displayed image.

As this invention may be embodied in several forms without departing from the spirit of essential characteristics thereof, the present embodiments described are therefore intended to be only illustrative and not restrictive, since the scope of the invention is defined by the appended claims rather than by the description preceding them, and all changes that fall within the metes and bounds of the claims, or equivalents of such metes and bounds, are therefore intended to be embraced by the claims.

## Claims

1. A projection-type liquid crystal display system comprising:
a display element (4) for modulating a linearly polarized component of reading light (L1) based on a display signal;
incidence means (2) for entering the linearly polarized component of said reading light emitted from a light source (1) into said display element; and
projection means (5) for projecting the reading light reflected from said display element on a screen (6), wherein
said display element (4) comprises:
a pixel electrode substrate (8) on which a plurality of rectangular pixel electrodes (7) are arrayed in a matrix pattern;
a transparent substrate (10) disposed in a confronting relationship with said pixel electrode substrate and having a transparent electrode (9) thereon;
liquid crystal (12) filled in a closed space between said pixel electrode substrate and said transparent substrate; and
alignment means (13, 14) for aligning or orientating said liquid crystal to a predetermined alignment direction in such a manner that said alignment direction of said liquid crystal is substantially parallel or normal to the direction of a side of said rectangular pixel electrode.

2. The projection-type liquid crystal display system in accordance with claim 1, wherein each of said plurality of pixel electrodes (7) is allocated to one of three primary colors of light, so that pixel electrodes corresponding to the same color are arrayed along the same line with respect to a first direction, meanwhile pixel electrodes corresponding to three primary colors are arrayed in a predetermined repetitive sequence with respect to a second direction different from said first direction, furthermore said alignment direction of said liquid crystal (12) is substantially parallel or normal to said first direction along which the same color pixel electrodes are arrayed.

3. The projection-type liquid crystal display system in accordance with claim 2, further comprising a holographic color filter (25) for entering reading light corresponding to each of said three primary colors to a corresponding pixel electrode (7) arranged on said pixel electrode substrate (8).

4. The projection-type liquid crystal display system in accordance with claim 2, further comprising a microlens array corresponding to the arrangement of pixels for entering reading light corresponding to each of said three primary colors to a corresponding pixel electrode (7) arranged on said pixel electrode substrate (8).

5. The projection-type liquid crystal display system in accordance with any one of claims 1 to 4, further comprising inverse signal supply means (33, 34) for supplying display signals having inverse polarities from each other to neighboring pixel electrodes.
